**Europäisches Patentamt**

**European Patent Office**

**Office européen des brevets**

(19)

(11) Veröffentlichungsnummer : **0 407 397 B1**

(12) # EUROPÄISCHE PATENTSCHRIFT

(45) Veröffentlichungstag der Patentschrift :
**23.10.91 Patentblatt 91/43**

(51) Int. Cl.$^5$ : **G01L 9/08, G01L 23/10**

(21) Anmeldenummer : **89902228.9**

(22) Anmeldetag : **15.02.89**

(86) Internationale Anmeldenummer :
**PCT/DE89/00086**

(87) Internationale Veröffentlichungsnummer :
**WO 89/09384 05.10.89 Gazette 89/24**

(54) **DRUCKGEBER ZUR DRUCKERFASSUNG IM BRENNRAUM VON BRENNKRAFTMASCHINEN.**

(30) Priorität : **02.04.88 DE 3811311**

(43) Veröffentlichungstag der Anmeldung :
**16.01.91 Patentblatt 91/03**

(45) Bekanntmachung des Hinweises auf die
Patenterteilung :
**23.10.91 Patentblatt 91/43**

(84) Benannte Vertragsstaaten :
**DE FR GB IT**

(56) Entgegenhaltungen :
**EP-A- 0 145 146**
**CH-A- 435 793**
**DE-C- 3 423 711**
**GB-A- 2 022 261**
**US-A- 2 096 826**
**US-A- 4 483 179**
**US-A- 4 570 097**

(73) Patentinhaber : **ROBERT BOSCH GmbH**
**Postfach 10 60 50**
**W-7000 Stuttgart 10 (DE)**

(72) Erfinder : **BARTIG, Ingo**
**Alt Lankwitz 96**
**W-1000 Berlin 46 (DE)**
Erfinder : **BURKEL, Rainer**
**Brühlstr. 5**
**W-7144 Asperg (DE)**
Erfinder : **HAMISCH, Hansjoachim**
**Stendelweg 49**
**W-1000 Berlin 19 (DE)**
Erfinder : **MOSER, Winfried**
**Grundweinberge 14**
**W-7140 Ludwigsburg (DE)**

EP 0 407 397 B1

Jouve, 18, rue Saint-Denis, 75001 PARIS

## Beschreibung

### Stand der Technik

Die Erfindung geht aus von einem Druckgeber nach der Gattung des Anspruchs 1. Bei einem derartigen bekannten Druckgeber wird der zeitliche Druckverlauf im Brennraum einer Brennkraftmaschine über die Krafteinwirkung auf einen oder mehrere Quarze unter Ausnutzung ihrer piezoelektrischen Eigenschaften bestimmt. Die die Kraft übertragenden Elemente werden mit starker mechanischer Vorspannung gegen die Quarze gedrückt. Diese Druckgeber weisen aber große dynamische Temperaturfehler auf und verschmutzen relativ schnell. Ferner ergibt sich infolge des rein mechanischen Kraftschlusses ein stärkeres Signalrauschen. Die bekannten Druckgeber sind nicht hinreichend unabhängig von Temperaturschwankungen. Dynamische Temperaturfehler werden verursacht durch zusätzliche Kräfte auf die Quarze im Motortakt, infolge der periodischen Temperaturänderungen im oberflächennahen Bereich zum Brennraum.

Aus der US-A-4 570 097 ist ein Brennraumpiezodruckgeber mit mechanischer Vorspannung bekannt, und in der GB-A-2022261 ist ein Piezodruckgeber mit Klebeverbindungen beschrieben.

Von der auf die Stirnfläche des Druckgebers, die durch die Membran und den Rand des Gehäuses gebildet wird, wirkenden Kraft wird ein Teil direkt vom Gehäuse aufgenommen, der restliche Teil indirekt über Stempel, Quarze und das Gegenlager ebenfalls vom Gehäuse. Dabei liegt der auf die Quarze einwirkenden Kraft K folgender Zusammenhang zugrunde:

$$K = \frac{p \cdot A_{eff}}{1 + c_M/c_{S,Q}}$$

K = Kraft
p = Druck
$A_{eff}$ = effektive Fläche
$c_M$ = Federkonstante des Membranrings
$c_{S,Q}$ = Federkonstante des Stempels mit Quarzen

Die auf die Quarze wirkende Kraft K wird somit im wesentlichen durch die effektive Fläche $A_{eff}$ der Druck/Kraftumwandlung bestimmt. Der Membranring ist dabei wie eine am Gehäuserand eingespannte Feder aufzufassen, die bei Belastung wegen der Stempelverkürzung elastisch verformt wird. Dadurch wird von dem durch $p \cdot A_{eff}$ bestimmten Kraftanteil infolge des Kraftnebenschlusses durch den Membranring ein Teil wieder direkt vom Gehäuse aufgenommen. Dieser Anteil ist vom Verhältnis der Federkonstanten des Membranrings $c_M$ und des Stempels mit den Quarzen $c_{S,Q}$ abhängig. Für einen eindeutigen Zusammenhang zwischen der gemessenen Kraft K und dem Druck p müssen die effektive Fläche $A_{eff}$ und die Federkonstanten $c_M$ bzw. $c_{S,Q}$ hinreichend unabhängig vom Druck und von der Temperatur sein. Bei genügend kleiner Federkonstante $c_M$ wirken sich diese Abhängigkeiten nicht störend aus.

Der zulässige Maximalwert für die Membranringfederkonstante $c_M$ wird aber noch kleiner durch die Forderung der Unterdrückung der dynamischen Temperaturfehler. Dafür muß die Federkonstante $c_M$ so klein wie möglich, der Membranring also so dünn wie möglich sein. Diese Forderung ist bei den bekannten Druckgebern nicht erfüllt.

### Vorteile der Erfindung

Der erfindungsgemäße Drucksensor mit den Merkmalen des Anspruchs 1 hat demgegenüber den Vorteil, daß das ermittelte Kraftsignal nahezu unabhängig von Druck- und Temperaturschwankungen ist.

Aufgrund der angegebenen Dicke des Membranringes hat dieser die notwendige kleine und während der Messung ausreichend konstante Federkonstante $c_M$. Damit kann der dynamische Temperaturfehler gegenüber bekannten Druckgebern stark verkleinert werden.

Durch die verwendeten Verbindungsarten Schweißen und Kleben, wodurch die starke mechanische Vorspannung entfällt, entstehen keine zusätzlichen, die Messung verfälschenden Störmöglichkeiten, insbesondere durch temperaturbedingte Änderungen er Vorspannung. Ferner ermöglicht der durch Kleben und Schweißen sich ergebende Platzgewinn einen kleineren Durchmesser des Druckgebers, der insbesondere einen Einbau in das Gehäuse einer Zündkerze erlaubt. Der Bearbeitungsaufwand für die im oben beschriebenen Kraftfluß liegenden Teile wird verringert. Das Verhältnis zwischen dem Meßsignal und dem Grundrauschen wird verbessert.

Bei Verwendung einer eingeschweißten Kappenmembran kann der Außendurchmesser relativ klein gehalten werden und der Aufbau vereinfacht werden. Ferner wird eine relativ große effektive Fläche $A_{eff}$ und damit eine relativ große Empfindlichkeit des Druckgebers erreicht. Die Kappenmembran macht einen Längenausgleich zwischen Gehäuse und Innenaufbau durch Nacharbeit nicht erforderlich. Die Kappenmembran wird durch den Kappenrand zentriert. Die Randschweißung, die mechanisch fest und gasdicht sein muß, bildet keine Begrenzung des Membranrings mehr.

Der Aufbau des Druckgebers bezüglich der Wärmewiderstände läßt an der Brennraumseite eine Selbstreinigungstemperatur erreichen, die den Dauereinsatz ermöglicht. Dabei steigt die Temperatur der Quarze nicht über 150° C, so daß für den piezoelektrischen Koeffizienten und damit für die Druckempfindlichkeit des Druckgebers der Bereich stärkerer Temperaturabhängigkeit vermieden wird. Eine zusätzliche Wasserkühlung ist nicht nötig.

Bei entsprechender Stempel- und Quarzgeometrie und wenn die damit verbundene niedrigere Druckempfindlichkeit des Druckgebers, die niedrigere Eigenfrequenz des Stempels sowie die höhere Beschleunigungsempfindlichkeit zulässig sind, kann zur Vereinfachung auch auf die Wärmeableitfolie zwischen dem Stempel und den Quarzen verzichtet werden, ohne die Quarztemperatur zu erhöhen. Dadurch kann auch ein einzuschraubendes Gegenlager für den Stempel entfallen.

Der Druckgeber kann als selbständige Einheit mit eigenem Gehäuse hergestellt werden und in das Gehäuse einer Zündkerze bereits vor Einbau des Kerzensteins eingesetzt werden. Die Einheit kann einfach mit einer vorne konischen Schraube gegen einen Sitz gedrückt werden.

Durch die Verwendung von im Querschnitt quadratischen Sensor-Blöcken entsteht Platz für die Bond-Drähte, über die die Meßspannung von den Quarzen abgegriffen werden kann. Die Herstellung der kleinen Sensor-Blöcke durch Zersägen von größeren, bereits mit Leitkleber zusammengeklebten Quarz- und Elektrodenplatten vermeidet die bei der Einzelklebung an den Stirnflächen der nur 0,2 mm dicken Quarzplatten auftretenden Isolationsprobleme durch rausquellenden Leitkleber und vereinfacht stark das Kleben der Platten.

Durch die in den Unteransprüchen aufgeführten Maßnahmen sind vorteilhafte Weiterbildungen des im Anspruch 1 angegebenen Drucksensors möglich.

## Zeichnung

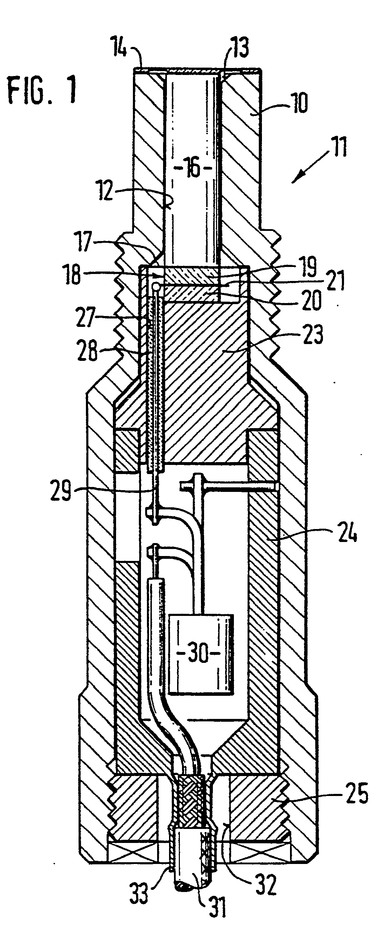

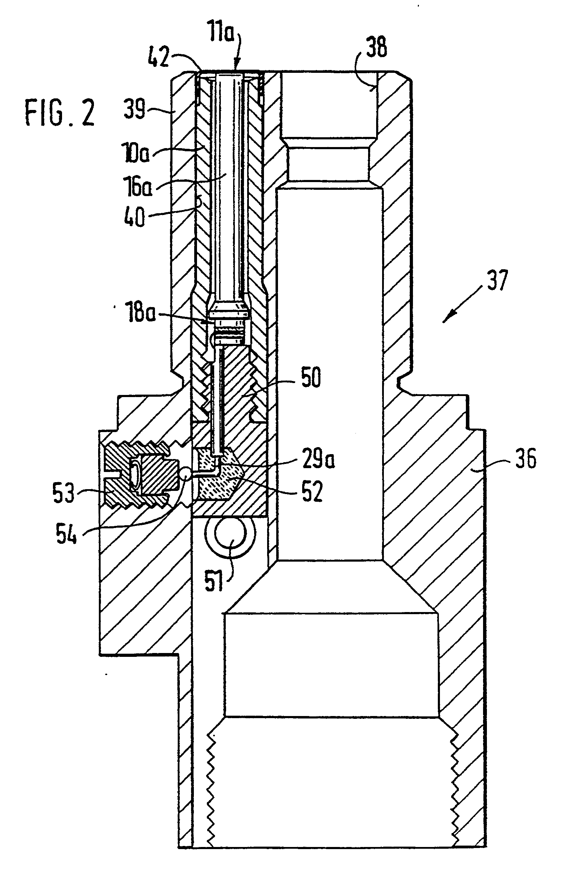

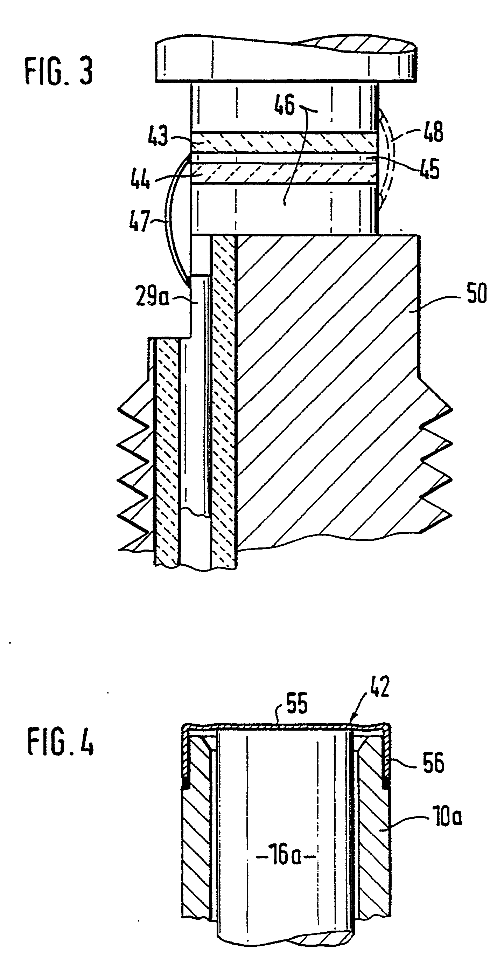

Ausführungsbeispiele der Erfindung sind in der Zeichnung dargestellt und in der nachfolgenden Beschreibung näher erläutert. Es zeigen Figur 1 einen Schnitt durch einen Druckgeber, Figur 2 einen Schnitt durch das Gehäuse einer Zündkerze mit eingebautem Druckgeber, Figur 3 eine Einzelheit aus Figur 2 und Figur 4 eine Kappenmembran.

## Beschreibung der Ausführungsbeispiele

In der Figur 1 ist mit 10 das Gehäuse eines Druckgebers 11 zur Bestimmung des Drucks im Brennraum einer Brennkraftmaschine bezeichnet. Es weist eine mittige, durchgehende, mehrfach abgesetzte Bohrung 12 auf. Die dem Brennraum zugewandte Öffnung 13 wird von einer geätzten Membran 14 abgeschlossen. Die Bohrung 12 ist im Bereich der Öffnung 13 konisch ausgebildet, so daß der Biegebereich der Membran 14 sich frei durchbiegen kann. Der äußere Ring der Membran 14 ist auf der Stirnseite des Gehäuses aufgeschweißt. Am mittleren Bereich der Membran 14, der dieselbe Dicke wie der äußere Ring aufweist, ist ein Stempel 16 mit seinem einen Ende angeschweißt, der mit seinem anderen Ende mit einer Wärmeleitfolie 17 verklebt ist. Der Stempel 16 ist in der Bohrung 12 geführt. Der Sensorblock 18 besteht aus zwei Quarzscheiben 19, 20, zwischen denen eine Zwischenelektrode 21 als Ableitelektrode eingeklebt ist. Der Sensorblock 18 ist zwischen die Wärmeleitfolie 17 und das Gegenlager 23 geklebt, das die Wärmeleitfolie 17 gegen eine Schulter des Gehäuses 10 drückt. Alle Klebungen im Bereich der Quarze werden mit einem hochtemperaturfesten Leitkleber, z.B. Epoxydharz mit Silberpulver, ausgeführt. Das Gegenlager 23 wird durch eine Andrückhülse 24 und eine in die Bohrung 12 eingeschraubte Abschlußschraube 25 in der Bohrung 12 befestigt. Ferner weist das Gegenlager 23 eine etwa achsparallel zur Bohrung 12 verlaufende, durchgehende Bohrung 27 auf, in der in einem Keramikrohr 28 die Ableitleitung 29 von der Zwischenelektrode 21 geführt wird. Die Ableitleitung 29 führt zu einem Transistor 30 bzw. direkt zu einem abgeschirmten Ableitkabel 31. Das Ableitkabel 31 ist in einer in die Bohrung 32 der Abschlußschraube 25 hineinragenden Tülle 33 der Andrückhülse 24 befestigt. Über das Ableitkabel 31 werden die Meßwerte zu einer nicht dargestellten Auswerteschaltung und Steuereinrichtung der Brennkraftmaschine geführt.

Die Funktion eines Druckgebers ist allgemein bekannt und hier deshalb nicht näher erläutert. Die über die Membran 14 und den Stempel 16 auf den Sensor 18 einwirkende Kraft erzeugt eine durch Polarisation hervorgerufene Oberflächenladung der Quarze 19, 20. Die durch die Oberflächenladung hervorgerufene Spannung wird als Meßsignal über die Zwischenelektrode 21 und die Ableitleitung 29 abgegriffen.

Die Wärmeleitfolie 17 trägt dazu bei, daß trotz hoher Temperaturen im Bereich von ca. 600° C an der Brennraumseite - für eine ausreichende Selbstreinigung der Druckgeberoberfläche - die Temperatur im Sensorblock 18 minimal 150° C beträgt. Den Hauptbeitrag dazu liefert der hohe Wärmewiderstand des Stempels 16, der durch die geringe Wärmeleitung des verwendeten Materials (V4A) und die Stempelgeometrie bedingt ist. Die 150°-Grenze ergibt sich aus der Temperaturabhängigkeit des piezoelektrischen Koeffizienten $d_{11}$, dessen Wert beim verwendeten $\alpha$-Quarz oberhalb 150° C steiler abfällt. Der $d_{11}$-Koeffizient beruht auf den kristallographischen Eigenschaften des $\alpha$-Quarzes. Er bestimmt bei der vorausgesetzten Orientierung der Plattennormalen parallel zur kristallographischen $\alpha$-Richtung des $\alpha$-Quarzes, die gleichzeitig die Kraftrichtung ist, die Größe der durch die Kraft erzeugten elektrischen Ladung.

Die Membran 14 ist mit einer ringförmigen, eingeätzten Vertiefung hergestellt. Um die damit mögliche gut definierte, vom Druck möglichst unabhängige effektive Fläche $A_{eff}$ für eine Druck-Kraftumwandlung zu erhalten, ist die Verschweißung des äußeren dicken Rings der Membran 14, der an der Stirnseite des Gehäuses 10 befestigt ist, und des mittleren Bereiches der Membran 14, der am Stempel 16 anliegt, bis möglichst dicht an den Rand der Vertiefung herangeführt.

Als Membran 14 kann z.B. eine 250 μm starke Nimonic 90-Folie verwendet werden, in die eine 1 mm breite ringförmige Vertiefung eingeätzt ist. Der dadurch entstehende Membranring weist als Biegebereich der Membran 14 eine Dicke von 60 bis 80 μm auf. Er hat eine gewünschte kleine Federkonstante $c_M$. Die Membran 14 kann, ohne daß dabei die Federkonstante $c_M$ beeinflußt wird, im weniger empfindlichen, dickeren Bereich verschweißt werden. Um eine minimale Vorspannung für die Quarzplatten zu erhalten, werden vor dem Schweißen Gehäuse- und Stempelende in Nacharbeit bündig geschliffen.

Die Membrandicke wurde so klein wie von den Festigkeitsanforderungen her möglich gewählt (Prüfdruck 300 bar). Die Federkonstante des Membranringes $c_M$ ist damit so klein, daß die von periodischen Temperaturänderungen ausgehenden Kraftwirkungen auf die Quarze, deren Größe mit der Federkonstanten $c_M$ bzw. mit der dritten Potenz der Membrandicke zunimmt, ebenfalls so klein wie möglich werden. Der dynamische Temperaturfehler wird dadurch auf ein Minimum reduziert. Der Ersatz der mechanischen Vorspannung durch Schweißen und Kleben in der Herstellung des Kraftschlusses von der Membran über Stempel, Quarze, Zwischenlagen und Gegenlager bis zum Gehäuse hat die bereits genannten Vorteile.

In Figur 2 ist ein in das Gehäuse 36 einer Zündkerze 37 eingebauter, als eigene Einheit hergestellter Druckgeber 11a dargestellt. Hierzu ist die Bohrung 38 für den Kerzenstein der Zündkerze 37 außermittig ausgebildet. In einer im dadurch entstehenden dickeren Teil 39 ausgebildeten Bohrung 40 ist der Druckgeber 11a angeordnet. Im Unterschied zum Ausführungsbeispiel nach Figur 1 weist der Druckgeber 11a eine in Figur 4 näher dargestellte, als Kappenmembran 42 ausgebildete Membran auf. Der Stempel 16a hat gegenüber dem Stempel in Figur 1 eine größere Länge und einen kleineren Durchmesser. Damit ist sein Wärmewiderstand soweit vergrößert, daß in Verbindung mit den dünneren Quarzplatten 43, 44 auf eine Wärmeleitfolie verzichtet werden kann. Der Sensorblock 18a ist mit dem anliegenden Stempel 16a und der Abschlußschraube 50 mit Leitkleber verbunden. Der Sensorblock 18a weist, wie aus Figur 3 näher ersichtlich, zwei Quarzplatten 43, 44 auf, deren x-Achsen entgegengesetzte Richtung, d.h. entgegengesetzte Polarisierung haben. Zwischen den Quarzplatten 43, 44 befindet sich eine Mittelelektrode 45 und oberhalb und unterhalb der Quarzplatten 43, 44 je eine Deckplatte 46. Die einzelnen Platten 43 bis 46 sind mit einem Leitkleber zusammengeklebt. Das Kleben wird bereits mit größeren Platten ausgeführt. Der geklebte Plattensatz wird nach dem Aushärten in die kleinen, hier quadratischen Sensorblöcke z.B. (1,8 x 1,8 mm²) zersägt. Dadurch entsteht genügend Raum, um für das Kontaktieren der Elektroden das Bonden der Halbleitertechnik einsetzen zu können, so daß der Platzbedarf für das Kontaktieren über den unteren Stempeldurchmesser nicht hinausgeht. Als Werkstoff für die Deckplatten 46 kann Eisen oder anderes Bondeigenschaften aufweisendes Material verwendet werden. Mit Hilfe eines Bond-Drahtes 47 ist die Mittelelektrode mit der Ableitleitung 29a und mit Hilfe eines zweiten Bond-Drahtes 48 sind die beiden Deckplatten 46 verbunden.

Die Ableitung 29a ist in einer mit isolierendem Kunstharz gefüllten Seitenbohrung 52 der Abschlußschraube 50 fixiert. Die Verbindung mit dem Anschlußkabel, das in einer anderen nicht dargestellten Ebene des Zündkerzengehäuses 36 fest und auswechselbar montiert ist, wird z.B. mit einer Kontaktschraube 53 hergestellt, die den Verbindungsdraht 54 gegen das Ende der Ableitleitung 29a drückt. Die Abschlußschraube 50 und somit das Gehäuse 10a des Druckgebers 11a wird mit einer von der Seite eingesetzten, vorne konischen Schraube 51 gegen die Wand der Bohrung 40 gedrückt und im Gehäuse 36 der Zündkerze 37 fixiert. Die Passung des Gehäuses 10a mit der Bohrung 40 sollte möglichst spielfrei sein. Um einen definierten Wärmeübergang zum Gehäuse 36 der Zündkerze 37 zu haben, sollte vor dem Einsetzen des Druckgebers 11a der Bereich des durch die Schraube 51 entstandenen Sitzes mit Silikonfett eingestrichen werden.

In Figur 4 ist die Kappenmembran 42 näher dargestellt. Sie ist topfförmig ausgebildet und weist einen ca. 80 μm dicken, als Membran dienenden Boden 55 und einen dickeren, z.B. 200 μm dicken zylindrischen Rand 56 auf. Dadurch kann in einfacher Weise die Dicke des Bodens 55, d.h. der Membran, sehr dünn sein, während zur Befestigung ein dickerer Rand 56 möglich ist. Nur der Rand 56 ist am Gehäuse 10a angeschweißt. Bei gleicher effektiver Fläche $A_{eff}$ kann der Durchmesser an dem dem Brennraum zugewandten Ende des Gehäuses 10a gegenüber der Ausbildung nach Figur 1 verkleinert werden. Ferner ist die Kappenmembran 42 automatisch zentriert. An den Boden 55 der Kappenmembran 42 ist der Stempel 16a angeschweißt. Hierzu eignet sich insbesondere das sogenannte Laserschweißen. Die Kappenmembran 42 hat eine gleichmäßige Druckempfindlichkeit über den ganzen Druckbereich und weist geringe Meßfehler bei Temperaturänderungen auf.

## Patentansprüche

1. Druckgeber (11) zur Druckerfassung im Brennraum von Brennkraftmaschinen, insbesondere Kraftfahrzeugen, in dessen Gehäuse (10) mindestens ein piezoelektrisch wirkender Kristall (19, 20), ein Stempel (16) und ein Gegenlager (23) angeordnet sind, dadurch gekennzeichnet, daß eine Membran (14) in einem Biegebereich eine Dicke von 60 bis 100 μm

aufweist, daß die Kraftübertragung zu dem mindestens einen piezoelektrisch wirkenden Kristall (19, 20, 43, 44) ohne mechanische Vorspannung lückenlos mit Stoffschluß hergestellt ist, daß die Verbindung von der Membran (14) zum Gehäuse (10) eine Schweißverbindung ist und daß alle Grenzflächen der an dem der Membran abgewandten Ende des Stempels (16) folgenden Bauteile (19, 20, 21, 23) mit Hilfe einer Klebeverbindung verbunden sind.

2. Druckgeber nach Anspruch 1, dadurch gekennzeichnet, daß die Dicke der Membran (14) im Biegebereich 60 bis 80 µm beträgt.

3. Druckgeber nach Anspruch 1 und/oder 2, dadurch gekennzeichnet, daß die Verbindung von der Membran (14) zum Stempel (16) eine Schweißverbindung ist.

4. Druckgeber nach einem der Ansprüche 1 bis 3, dadurch gekennzeichnet, daß die Klebeverbindung mit Hilfe eines Leitklebers hergestellt wird.

5. Druckgeber nach einem der Ansprüche 1 bis 3, dadurch gekennzeichnet, daß die Schweißverbindung mit Hilfe von Laserschweißen hergestellt wird.

6. Druckgeber nach einem der Ansprüche 1 bis 5, dadurch gekennzeichnet, daß die Membran als Kappenmembran (42) ausgebildet ist.

7. Druckgeber nach Ansprüche 6, dadurch gekennzeichnet, daß die Kappenmembran (42) einen als Beigebereich dienenden Boden (55) aufweist, dessen Dicke kleiner ist als die Dicke des Randes (56).

8. Druckgeber nach einem der Ansprüche 1 bis 7, dadurch gekennzeichnet, daß zwischen den Kristallen (19, 20) und dem Stempel (16) eine Wärmeleitfolie (17) angeordnet ist.

9. Druckgeber nach einem der Ansprüche 1 bis 8, dadurch gekennzeichnet, daß der Wärmewiderstand zwischen der Membran (14) und des Kristallen (19, 20) möglichst hoch ist, so daß an der Brennraumseite im Bereich der Membran (14) eine für eine Selbstreinigung der Brennraumseite ausreichende Temperatur herrscht, daß aber die Temperatur im Bereich der Kristalle (19, 20) so niedrig ist, daß die Abnahme des piezoelektrischen Koeffizienten ($d_{11}$) mit der Temperatur die Funktionsfähigkeit der Kristalle (19, 20) wenig beeinflußt.

10. Druckgeber nach einem der Ansprüche 1 bis 9, dadurch gekennzeichnet, daß ein quadratischer Sensorblock (18) aus einer zwischen den Kristallscheiben (43, 44) angeordneten Eisenschicht als Mittelelektrode (45) und zwei außenliegenden Eisenschichten (46) besteht und daß die Zwischenelektrode (45) mittels eines ersten Bond-Drahtes (47) mit einem Ableitdraht (29) und die außenliegenden Eisenschichten (46) mittels eines zweiten Bond-Drahtes (48) verbunden sind.

## Claims

1. Pressure sensor (11) for detecting pressure in the combustion space of internal combustion engines, in particular motor vehicles, in the housing (10) of which at least one piezoelectrically acting crystal (19, 20), a plunger (16) and a force bearing (23) are arranged, characterised in that a diaphragm (40) has a thickness of 60 to 100µm in a bending area, in that the force transmission to the at least one piezoelectrically acting crystal (19, 20, 43, 44) is produced without mechanical pretensioning, without gaps and with material connection, in that the connection of the diaphragm (14) to the housing (10) is a weld connection and in that all the border areas of the components (19, 20, 21, 23) following on the end, facing away from the diaphragm, of the plunger (16) are connected with the aid of a bonded connection.

2. Pressure sensor according to Claim 1, characterised in that the thickness of the diaphragm (14) is 60 to 80µm in the bending area.

3. Pressure sensor according to Claim 1 and/or 2, characterised in that the connection of the diaphragm (14) to the plunger (16) is a weld connection.

4. Pressure sensor according to one of Claims 1 to 3, characterised in that the bonded connection is produced with the aid of a conductive bonding agent.

5. Pressure sensor according to one of Claims 1 to 3, characterised in that the weld connection is produced with the aid of laser welding.

6. Pressure sensor according to one of Claims 1 to 5, characterised in that the diaphragm is constructed as a cap diaphragm (42).

7. Pressure sensor according to Claim 6, characterised in that the cap diaphragm (42) has a floor (55) serving as bending area, the thickness of which is smaller than the thickness of the edge (56).

8. Pressure sensor according to one of Claims 1 to 7, characterised in that a heat-conducting foil (17) is arranged between the crystals (19, 20) and the plunger (16).

9. Pressure sensor according to one of Claims 1 to 8, characterised in that the heat resistance between the diaphragm (14) and the crystals (19, 20) is as high as possible so that on the combustion space side in the region of the diaphragm (14) a temperature which is adequate for self-cleaning of the combustion space side prevails, in that, however, the temperature in the region of the crystals (19, 20) is so low that the drop in the piezoelectric coefficient ($d_{11}$) with temperature has little influence on the functional capability of the crystals (19, 20).

10. Pressure sensor according to one of Claims 1 to 9, characterised in that a square sensor block (18) consists of an iron layer, arranged between the crystal sheets (43, 44), as central electrode (45) and two outer iron layers (46), and in that the intermediate electrode (45) is connected to a discharge wire (29) by means of a first bonding wire (47) and the outer iron layers (46) are connected by means of a second bonding wire (48).

## Revendications

1. Capteur de pression (11) pour détecter la pression dans la chambre de combustion de moteurs à combustion interne, notamment de véhicules, dans le boîtier (10) duquel sont disposés au moins un cristal (19, 20) à effet piézo-électrique, un poinçon (16) et une butée (23), caractérisé : en ce que la membrane (14) comporte dans une zone flexible une épaisseur de 60 à 100 x 10$^{-6}$m, en ce que la transmission de l'effort à au moins un cristal (19, 20, 43, 44) à effet piézo-électrique est réalisée sans précontrainte mécanique de façon continue par bouchage de matière, en ce que la liaison de la membrane (14) avec le boîtier (10) est une liaison par soudage et, en ce que toutes les surfaces de séparation des pièces (19, 20, 21, 23) faisant suite à l'extrémité du poinçon (16) éloignée de la membrane sont liées par collage.

2. Capteur de pression selon la revendication 1, caractérisé en ce que l'épaisseur de la membrane (14) dans la zone de flexion atteind 60 à 80 x 10$^{-6}$m.

3. Capteur de pression selon la revendication 1 et/ou la revendication 2, caractérisé en ce que la liaison de la membrane (14) au poinçon (16) est une liaison par soudage.

4. Capteur de pression selon l'une des revendications 1 à 3, caractérisé en ce que la liaison par soudage est réalisée par soudure conductrice.

5. Capteur de pression selon l'une des revendications 1 à 3, caractérisé en ce que la liaison par soudage est réalisée par soudure au laser.

6. Capteur de pression selon l'une des revendications 1 à 5, caractérisé en ce que la membrane est réalisée comme membrane-capuchon (42).

7. Capteur de pression selon la revendication 6, caractérisé en ce que la membrane-capuchon (42) comporte un fond (55) servant de zone de flexion, et dont l'épaisseur est plus faible que l'épaisseur du bord (56).

8. Capteur de pression selon l'une des revendications 1 à 7, caractérisé en ce qu'entre les cristaux (19, 20) et le poinçon (16) est placée une feuille conductrice de la chaleur (17).

9. Capteur de pression selon l'une des revendications 1 à 8, caractérisé en ce que la résistance thermique entre la membrane (14) et les cristaux (19, 20) est la plus élevée possible, de sorte qu'il règne sur le côté de la chambre de combustion dans la zone de la membrane (14), une température suffisante pour l'autopurification du côté de la chambre de combustion mais en ce que la température dans la zone des cristaux (19, 20) est basse au point que la décroissante du coefficient piézo-électrique ($d_{11}$) avec la température influence peu la capabilité de fonctionner des cristaux (19, 20).

10. Capteur de pression selon l'une des revendications 1 à 9, caractérisé en ce qu'un bloc capteur (18) carré est composé d'une couche de fer placée comme électrode centrale (45) entre les disques de cristal (43, 44) et de deux couches en fer (46) externes et en ce que l'électrode centrale (45) au moyen d'un premier fil de liaison (47) se trouve reliée à un câble de dérivation (29) et les couches (46) de fer externes se trouvent reliées entre elles au moyen d'un deuxième fil de liaison (48).

FIG. 1

FIG. 2

FIG. 3

FIG. 4